# EUROPÄISCHE PATENTSCHRIFT

(11) **EP 2 319 780 B1**
(45) Veröffentlichungstag und Bekanntmachung des Hinweises auf die Patenterteilung: **23.05.2018**
(21) Anmeldenummer: 10177119.4
(22) Anmeldetag: 16.09.2010
(51) Int. Cl.: B65G 17/00

(54) **Fördersystem**
Conveying system
Système d'alimentation

(30) Priorität: 06.11.2009 DE 102009053231
(43) Veröffentlichungstag der Anmeldung: 11.05.2011
(73) Patentinhaber: Bayerische Motoren Werke Aktiengesellschaft, 80809 München (DE)
(72) Erfinder: Stumpf, Hellmuth, 84130, Dingolfing (DE); Näb, Robert, 85356, Freising (DE); Leserer, Peter, 93173, Wenzenbach (DE); Niedermeier, Ludwig, 81549, Muenchen (DE)

(56) Entgegenhaltungen:
- EP-A1- 0 449 706
- EP-A1- 0 939 041
- WO-A1-2010/012385
- DE-A1- 10 106 190
- DE-A1- 19 822 554
- DE-C1- 4 407 163
- DE-U1-202007 005 034
- KR-A- 20100 127 638
- US-A1- 2006 219 528

## Beschreibung

Die Erfindung bezieht sich auf ein Fördersystem zum Transport von Bau- und insbesondere Karosserieteilen, welche auf Paletten fixiert nacheinander zu aufeinanderfolgenden Arbeitsstationen verfahrbar und an diesen jeweils lagegenau positionierbar sind, nach dem Oberbegriff des Patentanspruchs 1.

Während Fördersysteme, die nach dem Shuttleprinzip arbeiten und die Bauteile über die gesamte Förderstrecke in stets gleich großen Förderschritten nacheinander zu den einzelnen Arbeitsstationen transportieren, einen konstanten, auf die Schrittlänge bezogenen Abstand zwischen den Arbeitsstationen und ein dementsprechend unflexibles Anlagenkonzept mit einer häufig übermäßig großen Gesamtlänge der Förderstrecke erfordern, lassen sich bei den bekannten Fördersystemen der eingangs genannten Art in Form von Rollenförderern mit antriebsschlüssig miteinander verkoppelten Einzelrollen, auf denen die Bauteile auf Paletten fixiert im Fertigungstakt von Arbeitsstation zu Arbeitsstation transportiert werden, die Abstände zwischen den Arbeitsstationen zwar individuell und dementsprechend auch die gesamte Förderstrecke längenflexibel gestalten, eine exakte Positionierung der Bauteile an den einzelnen Arbeitsstationen ist aber schlupfbedingt nur mit relativ niedrigen Beschleunigungs- und Verzögerungswerten und einem erheblichen Steueraufwand möglich.

Ferner sind in Verbindung mit einer taktmäßigen Bauteilbearbeitung von Karosserieteilen Gurtförderer bekannt, welche aus jeweils separat angetriebenen und zwischen aufeinanderfolgenden Arbeitsstationen verlaufenden Einzelbändern bestehen, auf denen die Karosserieteile, aufgeständert auf Stützschienen in Form sogenannter Lacktraversen, unmittelbar aufliegen und die zur Gewichtsentlastung der Obergurte auf stationären, sich zwischen den Umlenkrollen der Förderbänder erstreckenden Gleitflächen laufen. Auch bei diesen bekannten Fördersystemen lassen sich Fehlpositionierungen der Karosserieteile an den Arbeitsstationen nur mit vergleichsweise geringen Beschleunigungs- und Verzögerungswerten der Förderbänder und einem großen Steueraufwand vermeiden.

Aus der Druckschrift EP 0 449 706 A1 ist weiterhin ein Fördersystem nach dem Oberbegriff von Anspruch 1 bekannt, mit einem als Keilrippenriemen ausgestalteten Förderriemen. Der Antrieb erfolgt über Antriebsrollen, die mit einer mit den Keilrippen korrespondierenden Oberfläche ausgebildet sind. Die zu befördernden Lasten werden über antriebslose Laufrollen abgestützt.
Aufgabe der Erfindung ist es, ein Fördersystem der eingangs genannten Art so auszubilden, dass die Bauteile in exakter Positionierung und mit wesentlich verkürzten Transportzeiten zu abstandsvariabel platzierbaren Arbeitsstationen zu befördern sind.
Diese Aufgabe wird erfindungsgemäß durch das im Patentanspruch 1 gekennzeichnete Fördersystem gelöst.
Erfindungsgemäß wird aufgrund der Kombination von formschlüssig und daher schlupffrei angetriebenen Zahnriemenbändern, einer bewegungskonformen, nämlich dauerhaft festen Verbindung der die Bauteile aufnehmenden Paletten mit den Zahnriemen und der Abstützung des Paletten- und Bauteilgewichts auf antriebslosen Laufrollen ein positionssicherer Bauteiltransport selbst bei hohen Beschleunigungs- und Verzögerungswerten erzielt, die mehr als doppelt so hoch wie bei herkömmlichen, förderschrittvariablen Fördersystemen liegen, und dadurch die Transportzeit zwischen den einzelnen Arbeitsstationen ganz erheblich verkürzt und zugleich der Steueraufwand signifikant vereinfacht, da sich allein durch eine Kontrolle der Zahnriemenantriebe sicherstellen lässt, dass die Bauteile am Ende des Fördertaktes eine hochgenaue Ausrichtung zu der jeweiligen Arbeitsstation besitzen.

Erfindungsgemäß wird die bewegungsschlüssige Verbindung zwischen Paletten und Zahnriemenbändern dadurch bewirkt, dass die Paletten fest auf den Zahnriemenbändern montiert und diese jeweils zwischen zwei aufeinanderfolgenden Arbeitsstationen reversierend angetrieben sind. In diesem Falle werden die Paletten, nachdem sie an den Arbeitsstationen entladen wurden, während der laufenden Bauteilbearbeitung zu der jewels vorausgehenden Arbeitsstation zurückgefahren und mit dem dort bearbeiteten Bauteil erneut beladen. Bei dieser Variante der Erfindung werden die Zahnriemenbänder vorzugsweise gewichtsentlastet, und zu diesem Zweck sind die antriebslosen Laufrollen unmittelbar an den Paletten angebracht und auf stationären, parallel zu den Zahnriemenbändern verlaufenden Tragschienen geführt.

In weiterer vorteilhafter Ausgestaltung der Erfindung sind die Bauteile auf den Paletten vorzugsweise formschlüssig fixiert, so dass sie an den Arbeitsstationen auf einfache Weise, z. B. durch ein stationäres Bodenspannsystem, aus dem Formschluss in die Bearbeitungslage angehoben und in dieser verspannt werden können.

Wie bereits erwähnt, kann die Steuerung des Bauteiltransports hinsichtlich Geschwindigkeit und Förderschrittlänge allein durch eine Kontrolle der Zahnriemen-Antriebsrollen bewirkt werden, wozu vorzugsweise ein den Umdrehungswinkel des Zahnriemenantriebs erfassender Signalgeber vorgesehen ist, mit dem der Zahnriemenantrieb auf der Grundlage einer unter Berücksichtigung der Förderschrittlänge drehwinkelabhängig vorprogrammierten Geschwindigkeits-Kennlinie geregelt wird.

Nachfolgend wird die Erfindung anhand der in den Figuren stark schematisch dargestellten Ausführungsbeispiele näher beschrieben. Es zeigen:
- **Fig. 1**: ein Fördersystem in der Seitenansicht,
- **Fig. 2**: das Fördersystem nach Fig. 1 im Schnitt,
- **Fig. 3**: eine Geschwindigkeitskennlinie zur Antriebssteuerung,
- **Fig. 4**: eine der Fig. 1 entsprechende Darstellung eines Ausführungsbeispiels der Erfindung,
- **Fig. 5**: das Fördersystem nach Fig. 4 im Schnitt und
- **Fig. 6**: das in den Fign. 4 und 5 gezeigte Fördersystem in der Aufsicht.

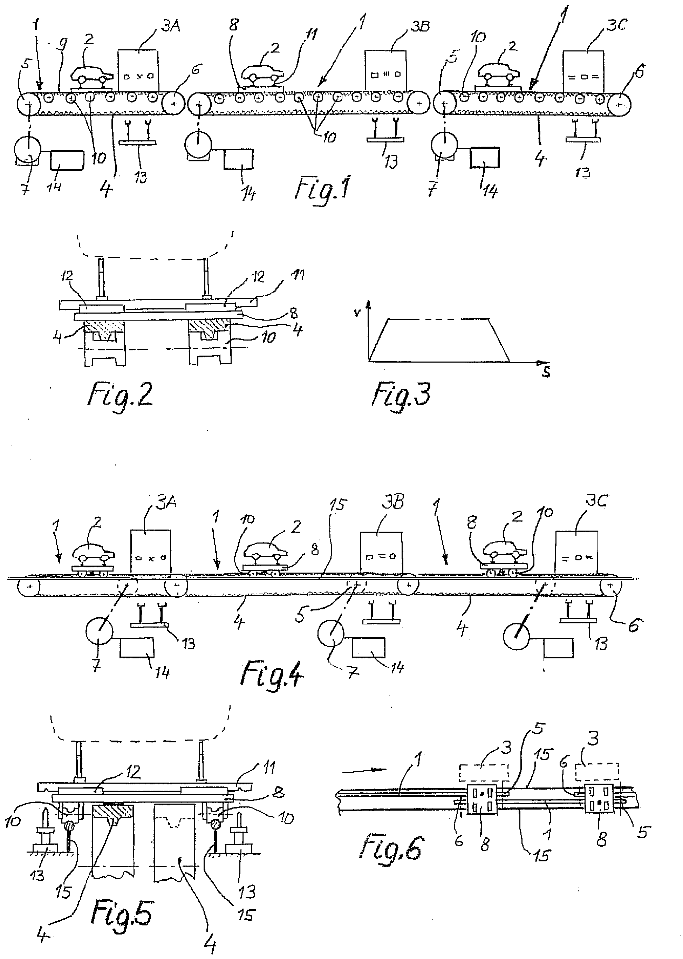

Das in den Fign. 1 und 2 gezeigte nicht beanspruchte Fördersystem enthält mehrere, in Förderrichtung hintereinander liegende und separat angetriebene Einzelförderer 1 zum taktweisen Transport von Karosserieteilen 2, z. B. Rohkarosserien, zu längs der Förderstrecke angeordneten Arbeitsstationen 3A....3C, zu denen die Karosserieteile 2 nacheinander befördert und dort jeweils stationsspezifisch bearbeitet werden. Aus Platzgründen sind die Arbeitsstationen 3 in unterschiedlicher Entfernung voneinander aufgestellt und dementsprechend unterschiedlich sind die einzelnen Förderlängen der zugeordneten Förderer 1.

Jeder Förderer 1 besteht aus einem doppelten Zahnriemenband 4 mit formgleich gezahnten Umlenkrollen 5, 6, von denen die eine zusammen mit einem Antriebsmotor 7 den Zahnriemenantrieb bildet. Beim Transport sind die Karosserieteile 2 auf Paletten 8 fixiert, die auf den Obergurten 9 der Zahnriemenbänder 4 aufliegen. Um unter der Wirkung des Bauteil- und Palettengewichts einen planaren Verlauf der Obergurte 9 und dadurch eine flächige Auflage zwischen Paletten 8 und Obergurten 9 sicherzustellen, sind diese auf der Unterseite zwischen den Umlenkrollen 5, 6 durch antriebslose, im Verzahnungsbereich der Zahnriemen 4 freigeschnittene Laufrollen 10 abgestützt. Ferner sind die Zahnriemen 4 auf der Außenfläche aus Gründen eines innigen, bewegungsschlüssigen Kontakts zu den Paletten 8 mit einer Haftschicht belegt.

Beim Transport und während der Bearbeitung sind die Karosserieteile 2 fest auf Stützelementen 11, so genannten Lacktraversen, montiert. Diese greifen formschlüssig in U-förmig nach oben geöffnete Aufnahmen 12 der Paletten 8, wodurch eine lagegenaue Fixierung der Karosserieteile 2 auf den Paletten 8 während des Bauteiltransports erreicht wird.

Wenn die Förderer 1 am Ende des Fördertaktes angehalten werden und sich die Karosserieteile 2 in einer exakt zu der jeweiligen Arbeitsstation 3 ausgerichteten Lage befinden, werden sie zusammen mit den Lacktraversen 11 durch ein Bodenspannsystem 13 aus dem Formschluss mit den Aufnahmen 12 ab-und in eine Bearbeitungsstellung angehoben. Nach Beendigung des Bearbeitungsvorgangs werden die Karosserieteile 2 gemeinsam mit den Lacktraversen 11 erneut in den Formschluss mit den Paletten 8 abgesenkt und auf diesen an den nachfolgenden Zahnriemenförderer 1 übergeben und so der Reihe nach von Arbeitsstation 3 zu Arbeitsstation 3 verfahren.

Wegen der schlupf- und verschiebesicheren Koppelung zwischen dem Antrieb 5, 7 der Förderer 1 und der Bauteilposition auf den Zahnriemenbändern 4 lassen sich hohe Beschleunigungen beim Anfahren aus den und Verzögerungen beim Abbremsen zu den Arbeitsstationen 3 ohne unkontrollierte Bauteilbewegungen realisieren. So konnte die Transportzeit bei einem Stationsabstand von z. B. 7 m gegenüber herkömmlichen Fördersystemen auf etwa die Hälfte verkürzt und dennoch eine zuverlässig hochgenaue Bauteilpositionierung an den Arbeitsstationen 3 sichergestellt werden. Ein entsprechender Geschwindigkeitsverlauf v in Abhängigkeit vom Förderweg s ist in Fig. 3 dargestellt. Zu Beginn des Fördertaktes steigt die Geschwindigkeit v steil an, verbleibt dann gewünschtenfalls auf einem konstanten Niveau und fällt dann wieder bis zur lagegenauen Ausrichtung der Karosserieteile 2 an der nächsten Arbeitsstation 3 stetig auf Null ab.

Die streng lineare Abhängigkeit der Bauteilbewegung von der Umdrehung des Zahnriemenantriebs 5, 7 hat den weiteren Vorteil, dass ein einziger, den Drehwinkel des Zahnriemenantriebs 5, 7 erfassender Signalgeber 14 ausreicht, um den Verlauf der Fördergeschwindigkeit bis hin zur exakten Ausrichtung der Karosserieteile 2 an den Arbeitsstationen 3 nach Maßgabe einer der Fig. 3 entsprechend vorprogrammierten Geschwindigkeits-Kennlinie positionssicher zu steuern.

Das Fördersystem nach den Fign. 4 bis 6, wo die dem ersten, nicht beanspruchten Ausführungsbeispiel entsprechenden Komponenten durch das gleiche Bezugszeichen gekennzeichnet sind, unterscheidet sich von diesem in erster Linie dadurch, dass die Paletten 8 fest auf den Zahnriemen 4 montiert und die Zahnriemenantriebe 5, 7 reversibel gestaltet sind. Ferner sind die antriebslosen Laufrollen 10 unmittelbar an den Paletten 8 angebracht und auf stationären, parallel zu den Zahnriemenbändern 4 verlaufenden Tragschienen 15 geführt. Auf diese Weise wird das Bauteil- und Palettengewicht nicht mehr auf dem Wege über die Zahnriemenbänder 4, sondern direkt an die Laufrollen 10 und über diese an die Tragschienen 15 übertragen.

In diesem Fall werden die Paletten 8, nachdem sie an den Arbeitsstationen 3 durch die Bodenspannsysteme 13 von den Karosserieteilen 2 entladen wurden, von den Zahnriemenförderern 1 während der laufenden Bauteilbearbeitung zu den jeweils vorhergehenden Arbeitsstationen 3 zurückgefahren und mit den dort zwischenzeitlich bearbeiteten Karosserieteilen 2 erneut beladen und im nächsten Fördertakt wieder zur Ausgangsstation 3 überführt. Da dabei jede Arbeitsstation 3 von zwei unterschiedlichen Zahnriemenförderern 1, nämlich einem die Karosserieteile 2 zuführenden und einem diese auf einer anderen Palette 8 abtransportierenden, bedient wird, überlappen sich die Zahnriemenförderer 1, wie in Fig. 6 angedeutet ist, im Stationsbereich. Im Übrigen ist die Bau- und Betriebsweise des Fördersystems nach den Fign. 4 bis 6 die gleiche wie bei dem ersten, nicht beanspruchten Ausführungsbeispiel.

## Patentansprüche

1. Fördersystem zum Transport von Bau- und insbesondere Karosserieteilen, bei dem die Bauteile auf Paletten (8) fixiert mittels eines Förderers nacheinander zu aufeinanderfolgenden Arbeitsstationen (3A... 3C) verfahrbar und an diesen jeweils lagegenau positionierbar sind, und
die Paletten (8) beim Bauteiltransport auf antriebslosen Laufrollen (10) abgestützt sind,
**dadurch gekennzeichnet, dass**
der Förderer aus einzelnen, separat und formschlüssig angetriebenen und jeweils zwischen aufeinanderfolgenden Arbeitsstationen (3) verlaufenden Zahnriemenbändern (1, 4) besteht und
die Paletten (8) fest auf den Zahnriemenbändern (4) montiert und diese jeweils zwischen zwei aufeinanderfolgenden Arbeitsstationen (3) reversierend angetrieben sind.

2. Fördersystem nach einem der vorangehenden Ansprüche, **dadurch gekennzeichnet, dass**
die Paletten (8) über die antriebslosen Laufrollen (10) auf feststehenden Führungsschienen (15) abgestützt sind.

3. Fördersystem nach Anspruch 1, **dadurch gekennzeichnet, dass** die antriebslosen Laufrollen (10) unmittelbar an den Paletten angebracht und auf stationären, parallel zu den Zahnriemenbändern (4) verlaufenden Tragschienen (15) geführt sind.

4. Fördersystem nach einem der vorhergehenden Ansprüche, **dadurch gekennzeichnet, dass**
die Bauteile (2) beim Transport formschlüssig auf den Paletten (8) fixiert und an den Arbeitsstationen (3) aus dem Formschluss in eine Bearbeitungslage anhebbar und in dieser verspannbar sind.

5. Fördersystem nach einem der vorhergehenden Ansprüche, **dadurch gekennzeichnet, dass**
zur Positionssteuerung der Paletten (8) ein allein nach Maßgabe des Umdrehungswinkels des Zahnriemenantriebs (5, 7) auf diesen einwirkender Signalgeber (14) vorgesehen ist.

## Claims

1. A conveyor system for transporting components and especially vehicle body parts, in which the components can be moved, fixed to pallets (8), by means of a conveyor in succession to successive work stations (3A ... 3C) and can be positioned thereat in each case in an accurate position, and
the pallets (8) during component transport are supported on driveless track rollers (10),
**characterised in that**
the conveyor comprises individual toothed belts (1, 4) which are driven separately and in positive manner and run in each case between successive work stations (3), and
the pallets (8) are mounted on the toothed belts (4) in fixed manner and these are driven in reversing manner in each case between two successive work stations (3).

2. A conveyor system according to one of the preceding claims,
**characterised in that**
the pallets (8) are supported on fixed guide rails (15) via the driveless track rollers (10).

3. A conveyor system according to Claim 1, **characterised in that** the driveless track rollers (10) are attached directly to the pallets and are guided on stationary bearing rails (15) running parallel to the toothed belts (4).

4. A conveyor system according to one of the preceding claims,
**characterised in that**
the components (2) upon transport are fixed to the pallets (8) in positive manner and can be lifted out of the positive fit at the work stations (3) into a processing position and can be braced therein.

5. A conveyor system according to one of the preceding claims,
characterised in thata signal generator (14) which acts on the toothed-belt drive (5, 7) solely according to the angle of rotation thereof in order to control the position of the pallets (8).

## Revendications

1. Système de convoyage permettant le transport de composants et en particulier de parties de carrosserie dans lequel les composants, fixés sur des palettes (8) peuvent être déplacés les uns après les autres au moyen d'un convoyeur vers des postes de travail (3A...3C) successifs, et y être positionnés précisément, et, les palettes (8) s'appuient, lors du transport des composants sur des galets de roulement (10) non entraînés,
**caractérisé en ce que**
le convoyeur est constitué de courroies dentées (1, 4) indépendantes entraînées séparément et par une liaison par la forme et se déplaçant chacune entre des postes de travail successifs (3), et
les palettes (8) sont montées solidairement sur les courroies dentées (4), et celles-ci sont respectivement entraînées de façon réversible entre deux postes de travail successifs (3).

2. Système de convoyage conforme à la revendication précédente,
**caractérisé en ce que**
les palettes (8) s'appuient par l'intermédiaire des galets de roulement non entraînés (10) sur des rails de roulement fixes (15).

3. Système de convoyage conforme à la revendication 1,
**caractérisé en ce que**
les galets de roulement non entraînés (10) sont directement montés sur les palettes et sont guidés sur des rails support stationnaires (15) s'étendant parallèlement aux courroies dentées (4).

4. Système de convoyage conforme à l'une des revendications précédentes,
**caractérisé en ce que**
lors du transport les composants (2) sont fixés par une liaison par la forme sur les palettes (8) et au niveau des postes de travail (3) peuvent être extraits par levage de la liaison par la forme pour être positionnés dans une position d'usinage et être extraits de cette position.

5. Système de convoyage conforme à l'une des revendications précédentes,
**caractérisé en ce que**
pour permettre la commande de la position des palettes (8) il est prévu un transmetteur de signaux (14) agissant sur celles-ci exclusivement en fonction de la valeur de l'angle de rotation de l'entraînement de la courroie dentée (5, 7).
